# EUROPEAN PATENT APPLICATION

(11) **EP 4 626 108 A1**
(43) Date of publication of application: **01.10.2025**
(21) Application number: 23909867.6
(22) Date of filing: 27.11.2023
(51) Int. Cl.: H04W 72/0446

(54) **COMMUNICATION METHOD AND RELATED COMMUNICATION APPARATUS**

(30) Priority: 30.12.2022 CN 202211733106
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Körber, Martin Hans
(86) International application number: PCT/CN2023/134460
(87) International publication number: WO 2024/139936

(57) **Abstract**

This application provides a communication method and a related communication apparatus. In the communication method in this application, responding UE selects, based on a first preset condition from a plurality of pieces of received COT sharing information that overlap in time domain, one piece of COT sharing information for communication, and properly uses overlapping COT sharing information, thereby improving SL-U communication quality. Optionally, according to the communication method in this application, indication information may be sent to peer UE that does not use COT sharing information, so that the COT sharing information or a COT of a non-overlapping part of the COT sharing information does not affect transmission of another COT, thereby avoiding a channel access conflict.

## Description

This application claims priority to Chinese Patent Application No. 202211733106.3, filed with the China National Intellectual Property Administration on December 30, 2022 and entitled "COMMUNICATION METHOD AND RELATED COMMUNICATION APPARATUS", which is incorporated herein by reference in its entirety.

### TECHNICAL FIELD

This application relates to the communication field, and in particular, to a communication method, a communication apparatus, a terminal device, a computer-readable storage medium, and a computer program product.

### BACKGROUND

In a wireless communication system, user equipment (user equipment, UE) may directly perform communication between UEs through a PC5 (direct communication) interface without using a network device.

When UEs communicate with each other through an unlicensed spectrum, before sending data, UE first needs to perform a channel access (listen before talk, LBT) process. After successfully performing LBT, the UE can obtain a channel occupancy time (channel occupancy time, COT) through preemption. A link between UEs is referred to as a sidelink (sidelink, SL), and unlicensed spectrum communication on the SL (SL-U) may support a UE-to-UE COT sharing (UE-to-UE COT sharing) mechanism. A principle of SL-U is as follows: SL-U communication is performed between UE 1 and UE 2. In an example, the UE 1 obtains a COT through preemption after successfully performing LBT, and the UE 1 may share the COT or a part of the COT with the UE 2. After the UE 2 receives the COT sharing, the UE 2 does not need to perform LBT again when transmitting information to the UE 1, thereby improving channel access efficiency, and improving SL-U communication quality.

However, in SL-U communication, responding (responding) UE may receive a plurality of pieces of COT sharing sent by a plurality of initiating (initiating) UEs, where the plurality of pieces of COT sharing may overlap each other in time domain. In this scenario, how the responding UE performs communication based on the plurality of pieces of overlapping COT sharing becomes an urgent technical problem to be resolved.

### SUMMARY

This application provides a communication method and a related communication apparatus, to properly process a plurality of pieces of COT sharing that overlap in time domain, and ensure SL-U communication quality.

According to a first aspect, this application provides a communication method, applied to a first terminal device. The method includes: receiving first information from a second terminal device, where the first information indicates a first shared channel occupancy time, and the first shared channel occupancy time is a channel occupancy time that is in a channel occupancy time of the second terminal device and that is used to be shared with the first terminal device; receiving second information from a third terminal device, where the second information indicates a second shared channel occupancy time, the second shared channel occupancy time is a channel occupancy time that is in a channel occupancy time of the third terminal device and that is used to be shared with the first terminal device, and the first shared channel occupancy time overlaps the second shared channel occupancy time; and when the first shared channel occupancy time and the second shared channel occupancy time meet a first preset condition, choosing to use the first shared channel occupancy time for communication.

**In** the method, the first terminal device selects a shared channel occupancy time based on the first preset condition for communication, and properly determines to use COT sharing information, thereby improving SL-U communication quality.

Optionally, the first preset condition includes at least one of the following conditions: a priority associated with the first shared channel occupancy time and a priority associated with the second shared channel occupancy time meet a first preset priority condition, whether the first shared channel occupancy time and the second shared channel occupancy time meet a preset location condition, a distance between at least two of the first terminal device, the second terminal device, and the third terminal device meets a preset distance condition, a length of an overlapping part of the first shared channel occupancy time and the second shared channel occupancy time in time domain meets a preset length condition, a start moment and an end moment of the first shared channel occupancy time and a start moment and an end moment of the second shared channel occupancy time meet a preset time condition, a minimum packet delay budget of the first terminal device for first to-be-transmitted information of the second terminal device and a minimum packet delay budget of the first terminal device for second to-be-transmitted information of the third terminal device meet a preset minimum packet delay budget condition, and a priority associated with the first to-be-transmitted information and a priority associated with the second to-be-transmitted information meet a second preset priority condition.

In some implementations, that the priority associated with the first shared channel occupancy time and the priority associated with the second shared channel occupancy time meet the first preset priority condition includes at least one of the following:
a channel access priority class corresponding to the first shared channel occupancy time is not lower than a channel access priority class corresponding to the second shared channel occupancy time, a layer 1 priority corresponding to the first shared channel occupancy time is not lower than a layer 1 priority corresponding to the second shared channel occupancy time, and a logical channel priority corresponding to the first shared channel occupancy time is not lower than a logical channel priority corresponding to the second shared channel occupancy time.

In some implementations, whether the first shared channel occupancy time and the second shared channel occupancy time meet the preset location condition includes at least one of the following:
the first shared channel occupancy time is not at a time domain end of the channel occupancy time of the second terminal device, and the second shared channel occupancy time is at a time domain end of the channel occupancy time of the third terminal device.

In some implementations, that the distance between the at least two of the first terminal device, the second terminal device, and the third terminal device meets the preset distance condition includes at least one of the following:
a first distance between the first terminal device and the second terminal device is not greater than the first distance threshold, a second distance between the first terminal device and the third terminal device is not less than a second distance threshold, and the first distance is not greater than the second distance.

In some implementations, that the length of the overlapping part of the first shared channel occupancy time and the second shared channel occupancy time in time domain meets the preset length condition includes:
a time domain proportion of the overlapping part of the first shared channel occupancy time and the second shared channel occupancy time in the first shared channel occupancy time is not less than a time domain proportion of the overlapping part in the second shared channel occupancy time.

In some implementations, that the start moment and the end moment of the first shared channel occupancy time and the start moment and the end moment of the second shared channel occupancy time meet the preset time condition includes at least one of the following:
the start moment of the first shared channel occupancy time is earlier than the start moment of the second shared channel occupancy time, and the end moment of the first shared channel occupancy time is later than the end moment of the second shared channel occupancy time.

**In** some implementations, that the minimum packet delay budget of the first terminal device for the first to-be-transmitted information of the second terminal device and the minimum packet delay budget of the first terminal device for the second to-be-transmitted information of the third terminal device meet the preset minimum packet delay budget condition includes:
the minimum packet delay budget of the first terminal device for the first to-be-transmitted information of the second terminal device is not greater than the minimum packet delay budget of the first terminal device for the second to-be-transmitted information of the third terminal device.

**In** some implementations, that the priority associated with the first to-be-transmitted information and the priority associated with the second to-be-transmitted information meet the second preset priority condition includes at least one of the following:
a channel access priority class associated with the first to-be-transmitted information is not lower than a channel access priority class associated with the second to-be-transmitted information, a layer 1 priority associated with the first to-be-transmitted information is not lower than a layer 1 priority associated with the second to-be-transmitted information, and a logical channel priority associated with the first to-be-transmitted information is not lower than a logical channel priority associated with the second to-be-transmitted information.

All conditions included in the first preset condition are strongly associated with the terminal device and sent COT sharing, and the first terminal device may use the first preset condition as a preferred condition.

Optionally, the communication method further includes: The first terminal device sends third information to the third terminal device, where the third information indicates that the first terminal device does not use the second shared channel occupancy time.

The third information is reject indication information for the third terminal device, so that second COT sharing does not affect transmission of another COT.

In some implementations, the first terminal device releases a connection to the third terminal device.

In some implementations, when the first terminal device releases sending the third information to the third terminal device, the third information is carried in a direct communication release message.

In other words, when or after sending the reject indication information to the third terminal device, the first terminal device releases the connection to the third terminal device, and the reject indication information does not depend on the second COT sharing.

In some implementations, the first terminal device sends padding information by using the second shared channel occupancy time.

Sending the padding information can avoid a case in which transmission of another COT is affected without using COT sharing.

In some implementations, the first terminal device transmits data information by using a first subchannel occupancy time in the second shared channel occupancy time, where the first subchannel occupancy time includes a channel occupancy time that is in the second shared channel occupancy time and that does not overlap the first shared channel occupancy time in time domain.

In other words, the first terminal device may not only use the first shared channel occupancy time, but also use the first subchannel occupancy time that does not overlap the second shared channel occupancy time.

Optionally, the first terminal device sends fourth information to the third terminal device, where the fourth information indicates that the first terminal device uses the first subchannel occupancy time.

Optionally, the first terminal device sends fifth information to the third terminal device, where the fifth information indicates that the first terminal device does not use a second subchannel occupancy time, and the second subchannel occupancy time is a channel occupancy time that is in the second shared channel occupancy time and that overlaps the first shared channel occupancy time in time domain.

In the method, indication information is sent to peer UE that does not use COT sharing, so that a COT in a non-overlapping part of the COT sharing does not affect transmission of another COT, thereby avoiding a channel access conflict.

Optionally, the method further includes: The first terminal device receives sixth information from the third terminal device, where the sixth information indicates that the second shared channel occupancy time is not at the time domain end of the channel occupancy time of the third terminal device.

In other words, that the second shared channel occupancy time is not at the time domain end of the channel occupancy time of the third terminal device means that there is still a non-shared channel occupancy time remaining at the time domain end of the second channel occupancy time. Therefore, the first terminal device cannot perform communication by using the non-shared channel occupancy time. Only in this case, the first terminal device sends indication information to the third terminal device, so that utilization of shared COT resources can be improved.

In some implementations, the first terminal device sends seventh information to the second terminal device, where the seventh information indicates that the first terminal device uses the first shared channel occupancy time.

In some implementations, the first terminal device sends padding information by using a first subchannel occupancy time, where the first subchannel occupancy time is a channel occupancy time that is in the second shared channel occupancy time and that does not overlap the first shared channel occupancy time in time domain.

Sending the padding information can avoid a case in which transmission of another COT is affected without using the second subchannel occupancy time.

According to a second aspect, this application provides a communication method, applied to a first terminal device. The method includes: receiving second information from a third terminal device, where the second information indicates a second shared channel occupancy time, and the second shared channel occupancy time is a channel occupancy time that is in a channel occupancy time of the third terminal device and that is used to be shared with the first terminal device; and
when to-be-transmitted information of the third terminal device is empty, sending padding information by using the second shared channel occupancy time.

In the method, sending the padding information resolves COT sharing processing in a special case in which the first terminal device does not have the to-be-transmitted information for the third terminal device.

According to a third aspect, a communication method provided in this application is applied to a third terminal device. The method includes: The third terminal device sends second information to a first terminal device, where the second information indicates a second shared channel occupancy time, and the second shared channel occupancy time is a channel occupancy time that is in a channel occupancy time of the third terminal device and that is used to be shared with the first terminal device; receives third information, fourth information, or fifth information from the first terminal device; and performs a subsequent operation based on the third information, the fourth information, or the fifth information from the first terminal device.

Optionally, when receiving the third information, and the third information indicates that the first terminal device does not use the second shared channel occupancy time, the third terminal device performs communication by using the second shared channel occupancy time.

The third terminal device directly performs communication by using the unused second shared channel occupancy time, thereby improving utilization of the shared channel occupancy time.

Optionally, when receiving the fourth information, and the fourth information indicates that the first terminal device transmits data information by using a first subchannel occupancy time in the second shared channel occupancy time, where the first subchannel occupancy time includes a channel occupancy time that is in the second shared channel occupancy time and that does not overlap a first shared channel occupancy time, and the first shared channel occupancy time is a channel occupancy time that is in a channel occupancy time of the second terminal device and that is used to be shared with the first terminal device,
the third terminal device performs communication by using the first subchannel occupancy time.

Optionally, when receiving the fifth information, and the fifth information indicates that the first terminal device does not use a second subchannel occupancy time, where the second subchannel occupancy time is a channel occupancy time that is in the second shared channel occupancy time and that overlaps a first shared channel occupancy time, and the first shared channel occupancy time is a channel occupancy time that is in a channel occupancy time of a second terminal device and that is used to be shared with the first terminal device,
the third terminal device performs communication by using a first subchannel occupancy time.

When the fourth information or the fifth information indicates that the first terminal device uses the first subchannel occupancy time or the second subchannel occupancy time, the third terminal device can use only the first subchannel occupancy time for communication. A difference lies in that a communication object is the first terminal device or another terminal device.

According to a fourth aspect, this application provides a communication apparatus. The communication apparatus includes functional modules configured to implement the method according to any one of the first aspect, the second aspect, and the third aspect or the implementations of the first aspect, the second aspect, and the third aspect. Optionally, each module may be implemented by using software and/or hardware.

According to a fifth aspect, this application provides an apparatus, including at least one processor and a communication interface. The communication interface and the at least one processor are interconnected through a line, and the at least one processor is configured to run a computer program or instructions, to perform the method according to any one of the first aspect, the second aspect, and the third aspect or the possible implementations of the first aspect, the second aspect, and the third aspect.

According to a sixth aspect, this application provides a computer-readable storage medium. The computer-readable storage medium stores computer-executable instructions, and when the computer-executable instructions are executed by a processor, the communication method according to the foregoing implementations is implemented.

According to a seventh aspect, this application provides a computer program product, including a computer program. When the computer program is executed by a processor, any communication method according to the foregoing implementations is implemented.

### BRIEF DESCRIPTION OF DRAWINGS

The accompanying drawings herein are incorporated into the specification and form a part of the specification, show embodiments in accordance with this application, and are used together with the specification to explain the principles of this application.
FIG. 1 is a diagram of a communication system applicable to a communication method according to an embodiment of this application;
FIG. 2 is a diagram of another communication system applicable to a communication method according to an embodiment of this application;
FIG. 3 is a diagram of still another communication system applicable to a communication method according to an embodiment of this application;
FIG. 4 is a diagram in which a terminal device obtains an SL resource to perform unlicensed spectrum communication;
FIG. 5 is a diagram in which a terminal device receives a plurality of pieces of COT sharing information sent by a plurality of other terminal devices;
FIG. 6 is a diagram in which COT sharing information received by a terminal device partially overlaps in time domain;
FIG. 7 is a diagram in which a shared part of a channel occupancy time is not at a time domain end of the channel occupancy time;
FIG. 8 is a flowchart of a communication method according to an embodiment of this application;
FIG. 9 is a flowchart of a communication method according to an embodiment of this application;
FIG. 10 is a diagram in which a first shared COT resource and a second shared COT resource partially overlap in time domain according to an embodiment of this application;
FIG. 11 is a flowchart of a communication method according to an embodiment of this application;
FIG. 12 is a diagram of a structure of a communication apparatus according to an embodiment of this application; and
FIG. 13 is a diagram of a structure of a communication apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples of the example embodiments are presented in the accompanying drawings. When the following description relates to the accompanying drawings, unless otherwise specified, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

In embodiments of this application, a radio access network (radio access network, RAN) device may be a device having a wireless transceiver function. The radio access network device may be a device that provides a wireless communication function service, is usually located on a network side, and includes but is not limited to a next generation NodeB (gNodeB, gNB) in a 5th generation (5th generation, 5G) communication system, a next generation base station in a 6th generation (6th generation, 6G) mobile communication system, a base station in a future mobile communication system, an access node in a Wi-Fi system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmission point (transmission point, TP), a base transceiver station (base transceiver station, BTS), or the like. In a network structure, the access network device may include a central unit (central unit, CU) node, a distributed unit (distributed unit, DU) node, a RAN device including a CU node and a DU node, or a RAN device including a CU control plane node, a CU user plane node, and a DU node. The access network device provides a service for a cell. A terminal device communicates with a base station through a transmission resource (for example, a frequency domain resource or a spectrum resource) used by the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service. The radio access network device may be a macro base station, or may be a micro base station or an indoor base station, or may be a relay node or a donor node, a device that provides a wireless communication service for a terminal device in a V2X communication system, a radio controller in a cloud radio access network (cloud radio access network, CRAN) scenario, a relay station, a vehicle-mounted device, a wearable device, a network device in a future evolved network, or the like. The access network device in embodiments may alternatively be an open-radio access network (open-radio access network, O-RAN) device, and the O-RAN device may include an open-distributed unit (open-distributed unit, O-DU) and an open-central unit (open-central unit, O-CU).

A specific technology and a specific device form that are used by the radio access network device are not limited in embodiments of this application. For ease of description, the following provides descriptions by using an example in which the radio access network device is a base station.

A terminal may also be referred to as a terminal device, user equipment (user equipment, UE), a mobile station (mobile station, MS), a mobile terminal (mobile terminal, MT), or the like, and may be an entity, on a user side, configured to receive or transmit a signal, for example, a mobile phone. The terminal device includes a handheld device, a vehicle-mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, automatic driving, telemedicine, a smart grid, smart furniture, smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. In embodiments of this application, an apparatus configured to implement a function of the terminal may be the terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus for implementing the function of the terminal is the terminal and the terminal is UE. A specific technology and a specific device form that are used by the terminal device are not limited in embodiments of this application.

Optionally, the UE may alternatively be configured to serve as a base station. For example, the UE may serve as a scheduling entity that provides a sidelink signal between UE in vehicle-to-everything (vehicle-to-everything, V2X), device-to-device (device-to-device, D2D), peer-to-peer (peer to peer, P2P), or the like.

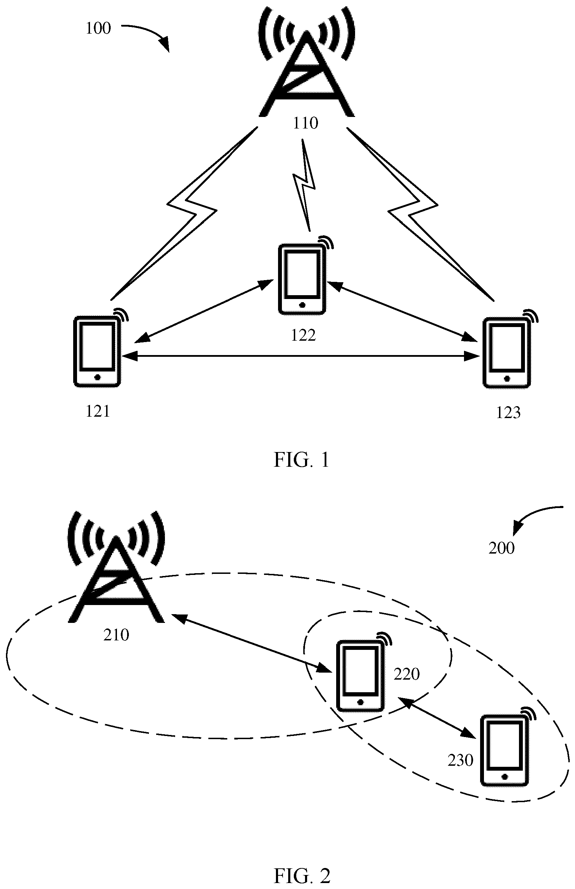

FIG. 1 is a diagram of a communication system applicable to a communication method according to an embodiment of this application. As shown in FIG. 1, the communication system 100 shown in FIG. 1 may include at least one radio access network device and a plurality of terminal devices, for example, a radio access network device 110 and terminal devices 121 to 123 shown in FIG. 1. The radio access network device 110 may communicate with each of the terminal devices 121 to 123 through a Uu interface, and SL-U communication may be performed between the terminal devices 121 to 123 through a PC5 interface.

For example, the terminal device 121 and the terminal device 122 may also communicate with each other, the terminal device 121 and the terminal device 123 may also communicate with each other, and the terminal device 122 and the terminal device 123 may also communicate with each other. In the system, if a vehicle is used as UE, an application scenario of the system is an internet of vehicles scenario, that is, vehicle-to-everything (V2X). It may be understood that the communication method provided in this application may be further applied to a system like a long term evolution (long term evolution, LTE) system, a new radio (new radio, NR) system, and a next-generation wireless local area network.

It should be noted that in the communication system 100 shown in FIG. 1, one or more of the terminal devices 121 to 123 may be located within coverage of the radio access network device 110, and one or more of the terminal devices 121 to 123 may be located outside coverage of the radio access network device 110.

It should be understood that FIG. 1 is merely an example, and shows one radio access network device and three terminal devices. However, this shall not constitute any limitation on this application. The communication system 100 may further include more radio access network devices, or may include more or fewer terminal devices. This is not limited in embodiments of this application.

FIG. 2 is another diagram of a communication system applicable to a communication method in an embodiment of this application. The communication system 200 shown in FIG. 2 is a communication system in a terminal device-to-network relay (for example, UE-to-network relay) scenario.

As shown in FIG. 2, the communication system 200 may include a radio access network device 210, UE 220 that can implement UE-to-network relay (UE-to-network relay) (which may be briefly referred to as relay UE (relay UE)), and remote UE (remote UE) 230.

In FIG. 2, the relay UE 220 may directly communicate with the radio access network device 210, and the remote UE 230 may communicate with the radio access network device 210 based on a relay service provided by the relay UE 220. It should be understood that a communication interface between the remote UE 230 and the relay UE 220 may be a PC5 interface, and the remote UE 230 may communicate with the relay UE 220 through a PC5 interface. Therefore, SL-U communication may also be implemented between the relay UE 220 and the remote UE 230.

It should be noted that, if UE can successfully establish a PC5 link to the relay UE, the UE may be considered as remote UE. The remote UE may be located within coverage of the radio access network, or may be located outside coverage of the radio access network. This is not limited in this embodiment of this application.

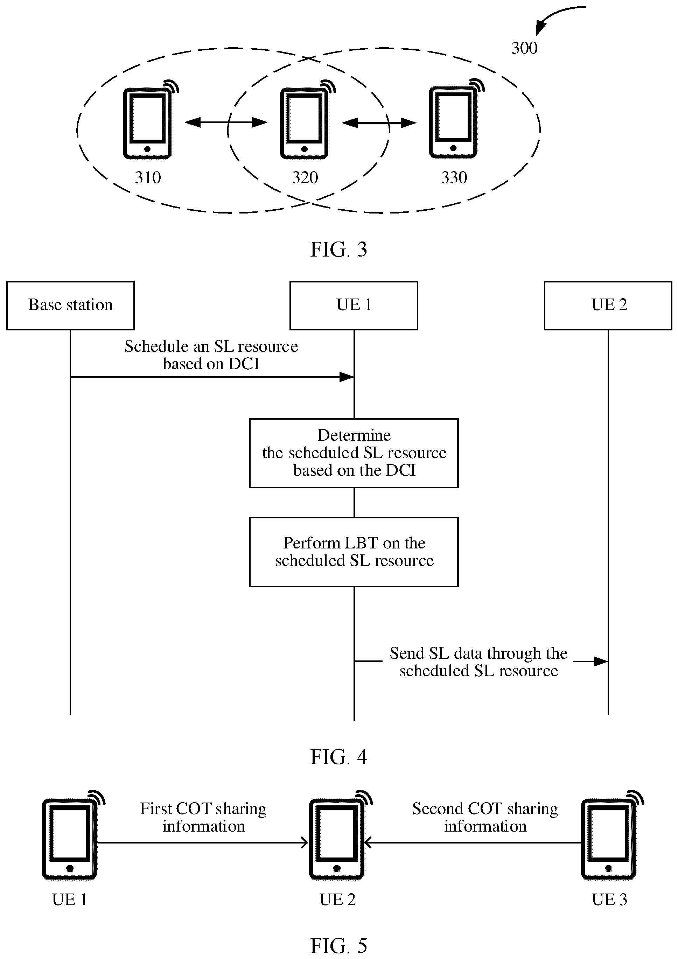

FIG. 3 is still another diagram of a communication system applicable to a communication method according to an embodiment of this application. The communication system 300 shown in FIG. 3 is a communication system in a UE-to-UE relay (for example, UE-to-UE relay) scenario.

The UE-to-UE relay scenario may include at least three UEs, where at least one UE may serve as relay UE. As shown in FIG. 3, the communication system 300 may include at least three UEs, for example, UE 310, UE 320, and UE 330 in the figure. The UE 320 is relay UE, the UE 310 may directly communicate with the relay UE 320, the UE 330 may also directly communicate with the relay UE 320, and the UE 310 may communicate with the UE 330 based on a relay service provided by the relay UE 320. The UE 310 may be, for example, source UE (source UE), and the UE 330 may be, for example, target UE (target UE).

It should be understood that a communication interface between the UE 310 and the UE 320 may be a PC5 interface, and the UE 310 may communicate with the UE 320 through a PC5 interface. Alternatively, a communication interface between the UE 320 and the UE 330 may be a PC5 interface, and the UE 320 may communicate with the UE 330 through a PC5 interface. Therefore, communication between the UE 310 and the UE 320, and communication between the UE 320 and the UE 330 may also be SL-U communication.

A link between UEs is referred to as a sidelink (SL). When performing data transmission through an SL, the UE first needs to obtain an SL resource. The UE obtains the SL resource in two modes, which are respectively referred to as mode 1 and mode 2. When the UE works in mode 1, a base station may schedule an SL resource for the UE by using downlink control information (downlink control information, DCI), or may configure an SL configured grant (configured grant) for the UE by using a radio resource control (radio resource control, RRC) message. The base station is a radio access network (radio access network, RAN) device that enables the UE to access a wireless network. When the UE works in mode 2, the UE may obtain an SL resource pool configuration from a base station or in a preconfigured manner, and select an SL resource from an SL resource pool for sending. The selection may be random selection or selection based on a monitoring result.

In a communication process between the UE and the base station, spectrum resources used by the UE and the base station are classified into a licensed spectrum and an unlicensed spectrum. The licensed spectrum can be used only by some organizations and operators. The unlicensed spectrum is a shared spectrum and can be used by different operators and organizations. To fairly use the unlicensed spectrum, the UE and the base station need to perform an LBT process before sending data. The LBT process is a detection process in which a communication device first detects whether a channel is idle before sending a signal on the channel. Therefore, the LBT process may also be referred to as clear channel assessment (clear channel assessment, CCA). Specifically, there are two types of LBT processes: a first type (type 1) and a second type (type 2). Generally, a type 2 channel access process takes shorter time than a type 1 channel access process. There are a plurality of time domain start locations in a time-frequency resource used for data transmission. If it is detected that a channel is idle before any time domain start location, it may be considered that LBT succeeds, and then the communication device can perform data transmission through a corresponding resource.

FIG. 4 is a diagram in which a terminal device obtains an SL resource in mode 1 to perform unlicensed spectrum communication. As shown in FIG. 4, UE 1 and UE 2 perform unlicensed spectrum communication (SL-U) through an SL. When the UE 1 serving as initiating UE works in mode 1, the base station may schedule an SL resource for the UE 1 by using DCI; and the UE 1 may determine, based on the DCI, the SL resource scheduled by the base station, and perform an LBT process on the scheduled SL resource. After LBT succeeds, the UE 1 can obtain a COT through preemption, and the UE 1 can send SL data to the UE 2 through the scheduled SL resource on the COT obtained through preemption. It may be understood that, if LBT fails, the UE 1 cannot use the scheduled SL resource.

It should be noted that, in FIG. 4, the UE 2 serving as responding UE is configured to receive the SL data sent by the UE 1. When the UE 2 serving as initiating UE sends SL data to the UE 1 or another UE, the UE 2 needs to perform LBT again. Because a UE-to-UE COT sharing mechanism is supported in an SL-U process, the UE 1 obtains a COT through preemption after LBT succeeds, and the UE 1 may share the COT or a part of the COT with the UE 2. In this case, the UE 2 may implement SL communication with the UE 1 by using the obtained COT sharing, and does not need to perform LBT again, thereby improving channel access efficiency, and improving SL-U communication quality. It should be noted that, after obtaining the COT sharing shared by the UE 1, the UE 2 does not need to perform type 1 LBT again, but may still need to perform type 2 LBT. Time consumed by type 2 LBT is greatly reduced, and access efficiency of the entire channel can be improved.

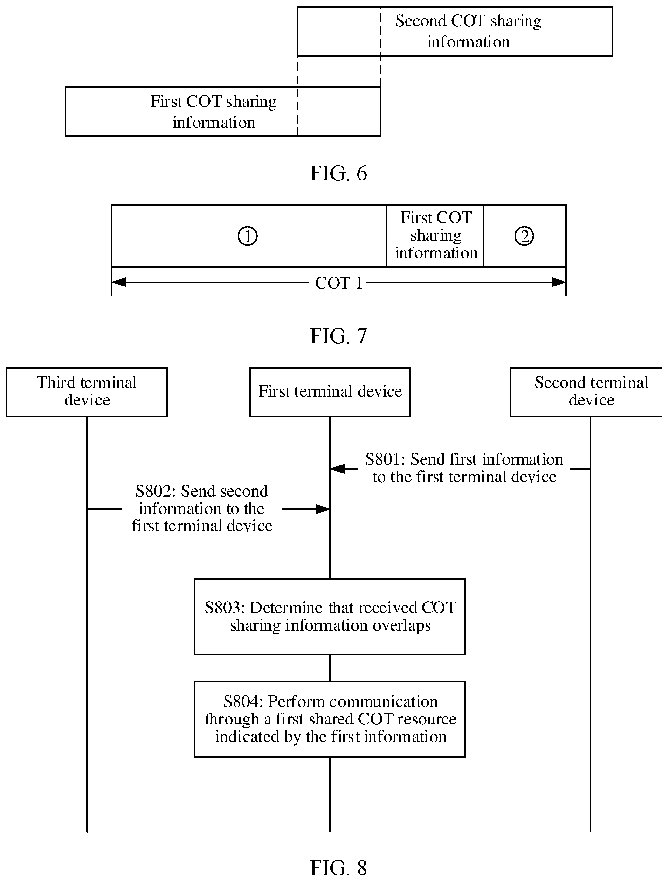

However, as shown in FIG. 5, the UE 2 serving as responding UE may receive a plurality of pieces of COT sharing from a plurality of initiating UEs. When two initiating UEs, the UE 1 and the UE 3, are far away from each other, the UE 1 and the UE 3 may obtain, through preemption, a plurality of COTs that overlap in time domain. Consequently, the plurality of pieces of COT sharing received by the UE 2 also overlap each other in time domain. As shown in FIG. 6, first COT sharing information and second COT sharing information received by the UE 2 overlap each other in time domain. For the plurality of pieces of COT sharing that overlap in time domain, the UE 2 serving as responding UE lacks a proper processing method.

In addition, as shown in FIG. 7, first COT sharing information (COT sharing 1) sent by the UE 1 to the UE 2 may be only a part of a COT 1 obtained by the UE 1. If the UE 2 performs SL communication without using the COT sharing 1, another UE may perform LBT within a period of time of the COT sharing 1 and determine that a channel is idle. In this way, the another UE may obtain a part ② of the COT 1 through preemption after successfully performing LBT, and consequently, the UE 1 (assuming that the part ② of the COT 1 is allocated to the UE 1 for use) and the another UE perform SL communication by using the same part ② of the COT 1, or the UE 3 (assuming that the UE 1 shares the part ② of the COT 1 with the UE 3) and the another UE perform SL communication by using the same part ② of the COT 1. As a result, a channel access conflict may be caused, and SL-U communication quality may be reduced.

To resolve the foregoing technical problem, this application provides a communication method and a communication apparatus, to properly process a plurality of pieces of COT sharing that overlap in time domain and that are received by responding UE, and improve SL-U communication quality.

A technical concept of this application is as follows: The responding UE selects, from the plurality of pieces of received COT sharing that overlap in time domain, COT sharing that meets a preset condition to perform SL communication, and properly uses the overlapping COT sharing, thereby improving SL-U communication quality.

This application further proposes that the responding UE sends accept indication information to initiating UE corresponding to the used COT sharing. Optionally, this application further proposes that the responding UE sends, to initiating UE corresponding to unused COT sharing, reject indication information or indication information indicating that the responding UE actually uses the COT sharing part, to avoid a channel access conflict between a plurality of UEs.

Optionally, in this application, after receiving the indication information sent by the responding UE, the initiating UE corresponding to the unused COT sharing may further perform SL communication by using the unused COT sharing or a non-overlapping part of the COT sharing.

As shown in FIG. 8, an embodiment of this application provides a communication method. The method is applied to unlicensed spectrum communication between UEs. The method may include S801, S802, S803, and S804.

S801: A second terminal device sends first information to a first terminal device, where the first information indicates a first shared channel occupancy time, and the first shared channel occupancy time is a channel occupancy time that is in a channel occupancy time of the second terminal device and that is used to be shared with the first terminal device. Correspondingly, the first terminal device receives the first information from the second terminal device.

For example, the first information may include first COT sharing (COT sharing) information.

The first terminal device may be denoted as UE 1, that is, serve as responding UE, and the second terminal device may be denoted as UE 2, that is, serve as initiating UE.

Before performing sending to the UE 1, the UE 2 may establish a communication link through a PC5 interface, where the communication link may be a unicast communication link, a multicast communication link, or a broadcast communication link.

The UE 2 communicates with the UE 1 based on an unlicensed spectrum. The UE 2 may obtain a COT through preemption after successfully performing LBT on an SL resource obtained via a base station, or the UE 2 may obtain a COT from the base station or another UE, that is, the COT is shared by the base station or another UE to the UE 2 after preemption, and the COT is a first COT.

The UE 2 may share the first COT or a part of the first COT with the UE 1. A first COT resource or a part of the first COT resource shared by the UE 2 with the UE 1 is a first shared COT resource, that is, a first shared channel occupancy time resource. The UE 1 may directly perform SL-U communication by using the first shared COT resource, thereby avoiding a type 1 LBT process, and improving channel access efficiency when the UE 1 performs SL-U communication, so that SL-U communication quality is improved.

The first COT sharing sent by the UE 2 to the UE 1 indicates that a COT resource shared by the UE 2 with the UE 1 is the first shared COT resource.

Optionally, the first information may further include location indication information, and the location indication information indicates whether the first shared COT resource is at an end of the first COT in time domain.

Optionally, the first information may further include information associated with the first shared COT resource, such as a channel access priority class (channel access priority class, CAPC) of the first shared COT resource or a priority of the first shared COT resource. It may be understood that the priority may be a layer 1 priority (L1 priority) or a logical channel priority (LCH priority).

S802: A third terminal device sends second information to the first terminal device, where the second information indicates a second shared channel occupancy time, and the second shared channel occupancy time is a channel occupancy time that is in a channel occupancy time of the third terminal device and that is used to be shared with the first terminal device. Correspondingly, the first terminal device receives first information from the second terminal device.

For example, the second information may be second COT sharing information.

The third terminal device may be denoted as UE 3, and is used as another initiating UE to perform SL-U communication with the UE 1. A COT obtained by the UE 3 through preemption after LBT succeeds or a COT obtained by the UE 3 from a base station or another UE is a second COT, and the UE 3 shares the second COT or a part of the second COT as a second shared COT resource with the UE 1.

The second COT sharing sent by the UE 3 to the UE 1 indicates that a COT resource shared by the UE 3 with the UE 1 is the second shared COT resource.

Optionally, the second information may further include location indication information, and the location indication information indicates whether the second shared COT resource is at an end of the second COT in time domain.

Optionally, the second information may further include information associated with the second shared COT resource, such as a channel access priority class (channel access priority class, CAPC) of the second shared COT resource or a priority of the second shared COT resource. It may be understood that the priority herein may be a layer 1 priority or a logical channel priority.

It may be understood that there is no specific time sequence in which the UE 1 receives the first COT sharing and the second COT sharing. COT sharing information received by the UE 1 is not limited to the foregoing two pieces of information, and more COT sharing information may be received.

S803: The first terminal device determines that the first shared channel occupancy time overlaps the second shared channel occupancy time.

For example, the UE 1 may determine, based on time domain locations respectively corresponding to the first shared COT resource indicated by the first COT sharing and the second shared COT resource indicated by the second COT sharing, that the first shared COT resource and the second shared COT resource overlap in time domain.

It may be understood that the first shared COT resource and the second shared COT resource may completely or partially overlap in time domain.

Optionally, the first shared COT resource and the second shared COT resource may also overlap each other in frequency domain or be located in a same resource set. The resource set may be a carrier, a bandwidth part (bandwidth part, BWP), a resource pool, or a resource block (resource block, RB) set (set).

S804: When the first shared channel occupancy time and the second shared channel occupancy time meet a first preset condition, the first terminal device performs communication by using the first shared channel occupancy time indicated by the first information.

In this embodiment, after receiving the first shared COT resource and the second shared COT resource that overlap in time domain and that are indicated by the COT sharing information, the UE 1 selects the first shared COT resource for communication when the first terminal device and/or the first shared channel occupancy time meet/meets a preset condition. The preset condition may be referred to as the first preset condition.

It may be understood that, in one case, the UE 1 may perform, by using the first shared COT resource, SL-U communication with the UE 2 that shares the first shared COT resource. In another case, the UE 1 may also perform SL-U communication with another UE by using the first shared COT resource, that is, an object with which the responding UE performs SL-U communication by using the shared COT resource is not limited to a sharing party of the used shared COT resource.

The first preset condition may include one or more of the following sub-conditions:
Sub-condition 1: A CAPC corresponding to the first shared COT resource is higher than or equal to a CAPC corresponding to the second shared COT resource. A higher CAPC indicates a smaller value corresponding to the CAPC. Therefore, the sub-condition 1 may also be expressed as that a value corresponding to the CAPC corresponding to the first shared COT resource is less than or equal to a value corresponding to the CAPC corresponding to the second shared COT resource.
Sub-condition 2: A priority corresponding to the first shared COT resource is higher than or equal to a priority corresponding to the second shared COT resource, that is, an L1 priority or LCH priority corresponding to the first shared COT resource is higher than or equal to an L1 priority or LCH priority corresponding to the second shared COT resource.
Sub-condition 3: A highest priority in to-be-transmitted information of the UE 1 for the UE 2 is higher than or equal to a highest priority in to-be-transmitted information of the UE 1 for the UE 3. The to-be-transmitted information of the UE 1 for the UE 2 is to-be-transmitted information that needs to be sent by the UE 1 to the UE 2. The to-be-transmitted information may include one or more of a sidelink media access control (media access control, MAC) control element (control element, CE), sidelink control channel (sidelink control channel, SCCH) service data unit (service data unit, SDU), that is, a sidelink signaling radio bearer (signaling radio bearer, SRB), and a sidelink traffic channel (sidelink traffic channel) SDU, that is, a sidelink data radio bearer (data radio bearer, DRB).
Sub-condition 4: A minimum packet delay budget (packet delay budget, PDB) in to-be-transmitted information of the UE 1 for the UE 2 is less than or equal to a minimum PDB in to-be-transmitted information of the UE 1 for the UE 3.
Sub-condition 5: A CAPC of to-be-transmitted information of the UE 1 for the UE 2 is higher than or equal to a CAPC of to-be-transmitted information of the UE 1 for the UE 3. It can be learned from the sub-condition 3 that the to-be-transmitted information may include one or more of an SL MAC CE, an SCCH SDU, and an STCH SDU. When the to-be-transmitted information includes the foregoing plurality of types of information, the CAPC of the to-be-transmitted information needs to be determined. In an example, the CAPC of the to-be-transmitted information may be determined according to the following rule:

If the to-be-transmitted information includes (only) one or more SL MAC CEs, the CPAC of the to-be-transmitted information is a highest CAPC, and is represented by using a value corresponding to the CAPC, that is, a value corresponding to the CPAC of the to-be-transmitted information is 1.

Alternatively, if the to-be-transmitted information includes one ore more SCCH SDUs, the CPAC of the to-be-transmitted information is a highest CAPC.

Alternatively, if the to-be-transmitted information includes one or more STCH SDUs, the CPAC of the to-be-transmitted information is a lowest CAPC in CAPCs corresponding to the one or more STCH SDUs.

Sub-condition 6: A start moment of the first shared COT resource in time domain is earlier than a start moment of the second shared COT resource in time domain.

Sub-condition 7: An end moment of the first shared COT resource in time domain is later than an end moment of the second shared COT resource in time domain.

Sub-condition 8: A proportion of an overlapping part of the first shared COT resource and the second shared COT resource to the first shared COT resource is greater than or equal to a proportion of the overlapping part of the first shared COT resource and the second shared COT resource to the second shared COT resource.

Sub-condition 9: A spatial location distance between the UE 1 and the UE 2 is less than or equal to a configured distance threshold, where a configuration manner may include preconfiguration or network configuration.

Sub-condition 10: A spatial location distance between the UE 1 and the UE 3 is greater than or equal to a configured distance threshold, where a configuration manner may include preconfiguration or network configuration.

Sub-condition 11: A spatial location distance between the UE 1 and the UE 2 is less than or equal to a spatial location distance between the UE 1 and the UE 3.

Sub-condition 12: The first shared COT resource is not at an end of the first COT in time domain.

Sub-condition 13: The second shared COT resource is at an end of the second COT in time domain.

Sub-condition 14: The UE 1 does not have to-be-transmitted information for the UE 3. The sub-condition 14 may be considered as an extreme case of the sub-condition 3 or the sub-condition 5, that is, the to-be-transmitted information of the UE 1 for the UE 3 is empty.

It may be understood that the first condition may include one or more sub-conditions that are not contradictory to each other in the foregoing conditions. For example, the first condition may be the sub-condition 1 and the sub-condition 12, or the sub-condition 5 and the sub-condition 12.

It should be noted that, related information of the first shared COT resource in the foregoing sub-condition is obtained based on the first COT sharing information sent by the UE 2, that is, when the UE 1 needs to use a related sub-condition to perform selection determining, the first COT sharing information sent by the UE 2 needs to include or be associated with information needed by the sub-condition, and the same applies to the second COT sharing information sent by the UE 3. For example, the sub-conditions 12 and 13 indicate whether the shared COT resource is at a time domain end of a COT in which the shared COT resource is located. The information may be included in the sharing information sent by the UE, or may be associated with the sharing information together with other sub-condition information.

In this embodiment, the first terminal device serving as the responding UE receives a plurality of pieces of overlapping COT sharing information sent by a plurality of initiating UEs. The first terminal device performs SL-U communication by using a shared COT resource indicated by one piece of COT sharing information, and properly uses the overlapping COT sharing information, thereby improving SL-U communication quality.

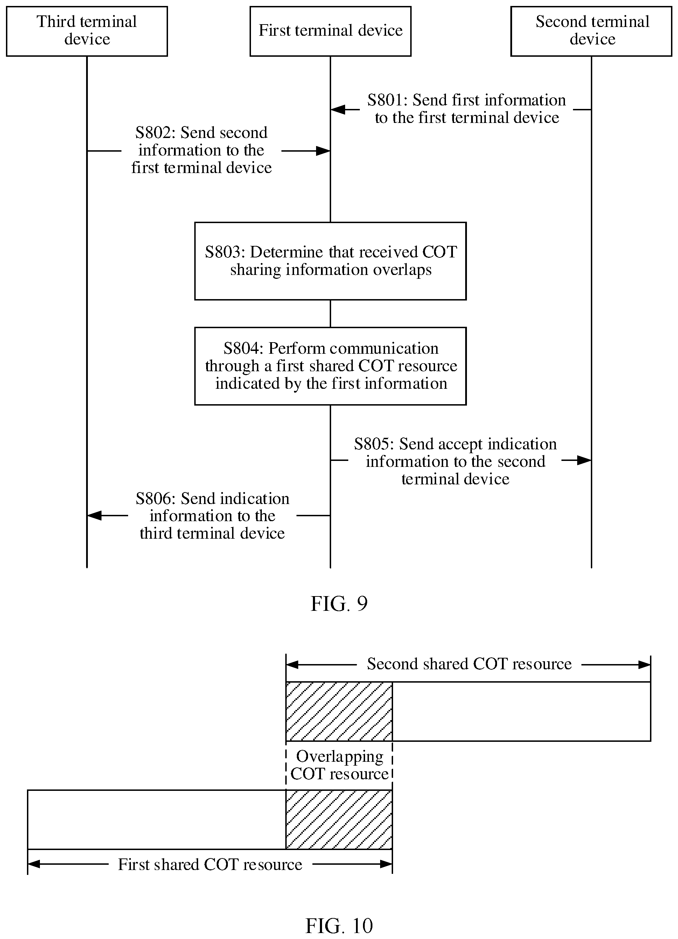

Optionally, in the communication method provided in this application, when the UE 1 performs communication by using the first shared COT resource indicated by the first COT sharing information, as shown in S805 in FIG. 9, the UE 1 may further send accept indication information to a sharing party of the first shared COT resource, that is, the UE 2, where the accept indication information indicates that the UE 1 uses the first shared COT resource provided by the UE 2.

The second terminal device may determine, based on the accept indication information sent by the first terminal device, that the first shared COT resource is used, to prevent the second terminal device from sharing the first shared COT resource with another terminal device. Optionally, as shown in S806 in FIG. 9, the UE 1 may further send indication information to the UE 3, where content specifically indicated by the indication information depends on a shared COT resource actually used by the UE 1.

**In** an example, the UE 1 performs communication only by using the first shared COT resource indicated by the first COT sharing information, and the UE 1 sends reject indication information to the UE 3, where the reject indication information indicates that the UE 1 does not use the second shared COT resource provided by the UE 3.

In some implementations, the indication information sent by the UE 1 to the UE 3 is reject indication information. In this case, the UE 1 may release a communication connection to the UE 3 when or after sending the reject indication information. When the UE 1 sends the reject indication information to the UE 3 and releases the communication connection to the UE 3 synchronously, the reject indication information may be carried in a direct communication release message (DIRECT_COMMUNICATION_RELEASE message). It should be noted that the direct communication release message may also be understood as a unicast connection release message.

FIG. 10 is a diagram in which a first shared COT resource and a second shared COT resource partially overlap in time domain according to an embodiment of this application.

As shown in FIG. 10, a shadow area represents a location at which the first shared COT resource and the second shared COT resource partially overlap in time domain, a non-overlapping part of the second shared COT resource is a first sub-resource in the second shared COT resource, and an overlapping part of the second shared COT resource is a second sub-resource in the second shared COT resource. Because the first shared COT resource and the second shared COT resource overlap in time domain, the first sub-resource is equivalent to a first subchannel occupancy time in time domain, and includes a channel occupancy time that is in the second shared channel occupancy time and that does not overlap the first shared channel occupancy time. Similarly, the second sub-resource is equivalent to a second subchannel occupancy time in time domain, and includes a channel occupancy time that is in the second shared channel occupancy time and that overlaps the first shared channel occupancy time.

In some implementations, the UE 1 performs communication by using the first shared COT resource indicated by the first COT sharing information. In this case, the UE 1 considers an overlapping COT resource as a part of the first shared COT resource, and the indication information sent by the UE 1 to the UE 3 indicates that the UE 1 does not use the second subchannel occupancy time provided by the UE 3.

In some implementations, the UE 1 not only uses the first shared COT resource indicated by the first COT sharing information for communication, but also actually uses the first subchannel occupancy time in the second shared channel occupancy time for communication. The indication information sent by the UE 1 to the UE 3 indicates that the UE 1 uses the first subchannel occupancy time provided by the UE 3.

In the foregoing implementation, the first terminal device sends the indication information to the third terminal device based on actual usage of the second shared COT resource. The indication information may be used as a basis for the third terminal device to subsequently process the second shared COT resource.

Optionally, the second COT sharing information sent by the UE 3 may further indicate whether the second shared COT resource is at an end of the second COT in time domain. Only when the second shared COT resource is not at the end of the second COT in time domain, the UE 1 determines, based on the actually used shared COT resource, to send the corresponding indication information to the UE 3.

That the second shared COT resource is not at the end of the second COT in time domain means that the second shared channel occupancy time is not at an end of the second channel occupancy time, and there is still a non-shared channel occupancy time for the UE 1 remaining at the end of the second channel occupancy time. Therefore, the first terminal device cannot perform communication by using the non-shared channel occupancy time. Only in this case, the first terminal device sends indication information to the third terminal device, so that utilization of shared COT resources can be improved.

Optionally, the indication information sent by the UE 1 to the UE 2 or the UE 3 may be carried in a PC5-S message, a PC5-RRC message, an SL MAC CE, or physical layer (physical layer, PHY) signaling.

In other words, the first terminal device serving as the responding UE may not depend on the shared COT resource when sending indication information to another initiating UE.

The foregoing describes an operation performed after the first terminal device serving as the responding UE receives the plurality of pieces of COT sharing information sent by the plurality of initiating UEs. The following describes an operation performed after the third terminal device serving as the initiating UE receives the indication information sent by the responding UE.

It can be learned from the foregoing embodiments that, the UE 3 receives the indication information from the UE 1, where content specifically indicated by the indication information depends on the shared COT resource actually used by the UE 1.

In some implementations, the indication information received by the UE 3 from the UE 1 is reject indication information, indicating that the UE 1 does not use the second shared COT resource provided by the UE 3. In this case, the UE 3 may perform SL communication with another UE by using the second shared COT resource indicated by the second COT sharing information sent to the UE 1. In addition, the UE 3 may further send the second COT sharing information to the another UE again.

After receiving the reject indication information, the third terminal device still continues to use the second COT sharing information, thereby improving utilization of the second COT shared resource.

In some implementations, the indication information received by the UE 3 from the UE 1 indicates that the UE 1 does not use the second subchannel occupancy time provided by the UE 3. In this case, the UE 3 may perform SL communication with another UE by using the first sub-resource in the second COT sharing information sent to the UE 1. In addition, the UE 3 may further send, to the another UE again, some sharing information that is in the second COT sharing information and that indicates the first sub-resource.

Optionally, the indication information received by the UE 3 from the UE 1 may further indicate that the UE 1 uses the first subchannel occupancy time provided by the UE 3. In this case, the UE 3 performs SL communication with the UE 1 by using the first sub-resource, that is, receives, on the first sub-resource, information transmitted by the UE 1 for the UE 3.

The third terminal device properly uses the first sub-resource in the second COT sharing information based on the received specific indication information, and performing SL communication by using the first sub-resource does not affect an overlapping part of the first COT shared resource. This not only improves utilization of a non-overlapping first sub-resource part of the second COT shared resource, but also facilitates SL-U communication quality when the first terminal device uses the first COT shared resource.

In the foregoing embodiment, for the COT shared resource that is actually not used by the responding UE, the initiating UE may still use the COT shared resource. The following describes a special processing method for the COT shared resource that is actually not used by the responding UE.

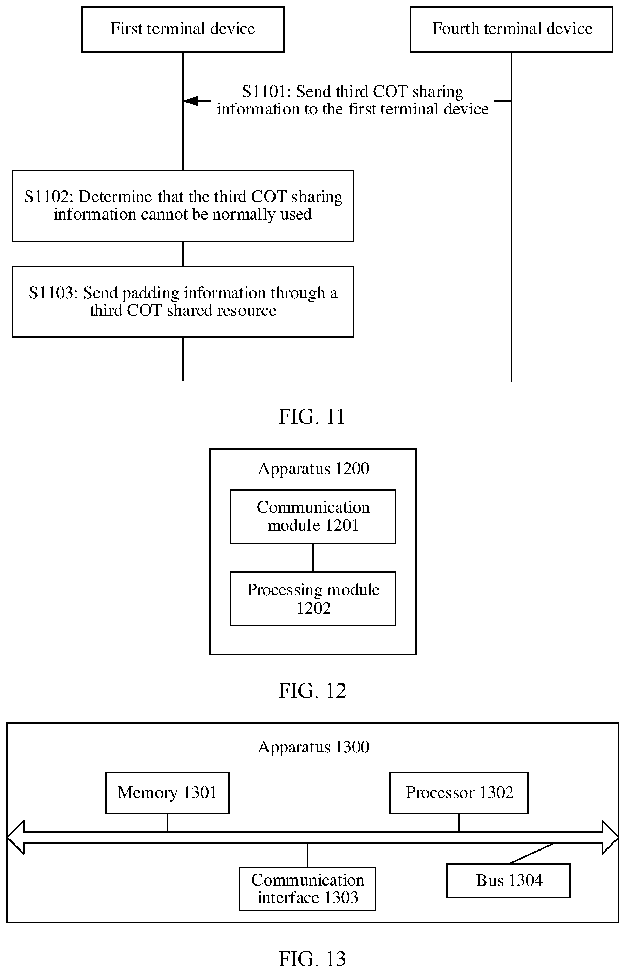

As shown in FIG. 11, an embodiment of this application provides a communication method. The method is applied to unlicensed spectrum communication between UEs, and specifically includes the following steps.

S1101: A fourth terminal device sends third COT sharing information to a first terminal device.

The first terminal device is UE 1, that is, serves as responding UE, and the fourth terminal device is UE 4, that is, serves as initiating UE. The third COT sharing sent by the UE 4 to the UE 1 indicates that a COT resource shared by the UE 4 with the UE 1 is a third shared COT resource.

S1102: The first terminal device determines that the third COT sharing information cannot be normally used.

Usually, UE 43 sends a second shared COT resource to the UE 1, so that the UE 1 performs SL communication with the UE 4 by using the third shared COT resource, to facilitate information transmission, improve channel access efficiency, and improve SL-U communication quality. However, there is a case in which the UE 1 does not have to-be-transmitted information for the UE 4. In this case, it may be considered that the UE 1 cannot normally use the third COT sharing information. If the UE 1 receives a plurality of pieces of overlapping COT sharing information, and the third COT sharing information is not used because a first preset condition is not met, it may also be considered that the UE 1 cannot normally use the third COT sharing information.

S1103: The first terminal device sends the padding information through a third COT shared resource.

After determining that the third COT sharing information cannot be normally used, the UE 1 may send blank placeholder padding (padding) information at a time domain location corresponding to the third COT shared resource. In this way, although the UE 1 cannot normally use the third COT shared resource, it can be ensured that another UE cannot perform channel access when performing LBT in time domain corresponding to the third COT shared resource. When the third COT shared resource partially overlaps with another COT shared resource in time domain, the UE 1 may send the padding information by using a non-overlapping part of the third COT shared resource.

It should be noted that, in some implementations, the third COT sharing information sent by the UE 4 may further indicate whether the third shared COT resource is at an end of the third COT in time domain. Only when the third shared COT resource is not at the end of the third COT in time domain, the UE 1 sends the padding information in time domain corresponding to the third COT shared resource.

In this embodiment, when the responding UE cannot normally use the shared COT resource sent by the initiating UE, a method for sending blank placeholder information in time domain corresponding to the shared resource is provided, to prevent another UE from occupying a channel after performing LBT, and improve SL-U communication quality.

FIG. 12 is a diagram of a structure of a communication apparatus according to an embodiment of this application. As shown in FIG. 11, the apparatus 1200 in this embodiment may include a communication module 1201 and a processing module 1202.

In an example, the apparatus 1200 may be configured to implement the method implemented by the first terminal device in the method shown in FIG. 8, FIG. 9, or FIG. 11.

For example, the communication module 1201 may be configured to implement the operations implemented by the first terminal device in S801, S802, and S804, and the processing module 1202 may be configured to implement the operations implemented by the first terminal device in S803.

Optionally, the communication module 1201 may be further configured to implement the operations implemented by the first terminal device in S805 and S806.

For another example, the communication module 1201 may be configured to implement the operations implemented by the first terminal device in S1101 and S1103, and the processing module 1202 may be configured to implement the operations implemented by the first terminal device in S1102.

In an example, the apparatus 1200 may be configured to implement the method implemented by the third terminal device or the fourth terminal device in the method shown in FIG. 8, FIG. 9, or FIG. 11.

For example, the communication module 1201 may be configured to implement the operations implemented by the third terminal device in S802.

For another example, the communication module 1201 may be configured to implement the operations implemented by the fourth terminal device in S1101.

It may be understood that the apparatus 1200 may be presented in a form of a functional module. The term "module" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 1200 has functions of implementing corresponding procedures and/or steps in the foregoing method embodiments. The foregoing functions may be implemented by hardware, or may be implemented by hardware executing corresponding software. The hardware or the software includes one or more modules corresponding to the functions.

FIG. 13 is a diagram of a structure of a communication apparatus according to another embodiment of this application. The apparatus 1300 shown in FIG. 13 may be configured to perform the method performed by the first terminal device, the third terminal device, or the fourth terminal device in any one of the foregoing methods.

As shown in FIG. 13, the apparatus 1300 in this embodiment includes a memory 1301, a processor 1302, a communication interface 1303, and a bus 1304. Communication connections between the memory 1301, the processor 1302, and the communication interface 1303 are implemented through the bus 1304.

The memory 1301 may be a read-only memory (read-only memory, ROM), a static storage device, a dynamic storage device, or a random access memory (random access memory, RAM). The memory 1301 may store a program. When the program stored in the memory 1301 is executed by the processor 1302, the processor 1302 is configured to perform any one of the foregoing methods.

The processor 1302 may be a general-purpose central processing unit (central processing unit, CPU), a microprocessor, an application-specific integrated circuit, or one or more integrated circuits, and is configured to execute a related program.

The processor 1302 may alternatively be an integrated circuit chip and has a signal processing capability. In an implementation process, the related steps in embodiments of this application may be completed by using a hardware integrated logic circuit or an instruction in a form of software in the processor 1302.

The processor 1302 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 1301. The processor 1302 reads information in the memory 1301, and completes, in combination with hardware of the processor 1302, functions that need to be performed by units included in the apparatus in this application.

The communication interface 1303 may use, but not limited to, a transceiver apparatus of a transceiver type, to implement communication between the apparatus 1300 and another device or an apparatus.

The bus 1304 may include a path for information transmission between various components (for example, the memory 1301, the processor 1302, and the communication interface 1303) of the apparatus 1300.

An embodiment of this application further provides a computer-readable storage medium. The computer-readable storage medium stores computer instructions. When executing the computer instructions, a processor implements the steps in the methods in the foregoing embodiments.

An embodiment of this application further provides a computer program product, including computer instructions. When the computer instructions are executed by a processor, the steps in the methods in the foregoing embodiments are implemented.

It should be noted that the modules or components shown in the foregoing embodiments may be one or more integrated circuits configured to implement the foregoing methods, for example, one or more application-specific integrated circuits, one or more microprocessors, or one or more field programmable gate arrays. For another example, when the foregoing module is implemented in a form in which a processing element invokes program code, the processing element may be a general-purpose processor, for example, a central processing unit or another processor that can invoke program code, for example, a controller. For another example, these modules may be integrated together and implemented in a form of a system-on-a-chip (system-on-a-chip, SoC).

All or some of the foregoing embodiments may be implemented by using software, hardware, firmware, software modules or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and the embodiments are merely considered as examples, and the actual scope of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. A communication method, applied to a first terminal device, wherein the method comprises:
receiving first information from a second terminal device, wherein the first information indicates a first shared channel occupancy time, and the first shared channel occupancy time is a channel occupancy time that is in a channel occupancy time of the second terminal device and that is used to be shared with the first terminal device;
receiving second information from a third terminal device, wherein the second information indicates a second shared channel occupancy time, the second shared channel occupancy time is a channel occupancy time that is in a channel occupancy time of the third terminal device and that is used to be shared with the first terminal device, and the first shared channel occupancy time overlaps the second shared channel occupancy time; and
when the first shared channel occupancy time and the second shared channel occupancy time meet a first preset condition, choosing to use the first shared channel occupancy time for communication.

2. The method according to claim 1, wherein the first preset condition comprises at least one of the following conditions: a priority associated with the first shared channel occupancy time and a priority associated with the second shared channel occupancy time meet a first preset priority condition, whether the first shared channel occupancy time and the second shared channel occupancy time meet a preset location condition, a distance between at least two of the first terminal device, the second terminal device, and the third terminal device meets a preset distance condition, a length of an overlapping part of the first shared channel occupancy time and the second shared channel occupancy time in time domain meets a preset length condition, a start moment and an end moment of the first shared channel occupancy time and a start moment and an end moment of the second shared channel occupancy time meet a preset time condition, a minimum packet delay budget of the first terminal device for first to-be-transmitted information of the second terminal device and a minimum packet delay budget of the first terminal device for second to-be-transmitted information of the third terminal device meet a preset minimum packet delay budget condition, or a priority associated with the first to-be-transmitted information and a priority associated with the second to-be-transmitted information meet a second preset priority condition.

3. The method according to claim 2, wherein that the priority associated with the first shared channel occupancy time and the priority associated with the second shared channel occupancy time meet the first preset priority condition comprises at least one of the following:
a channel access priority class corresponding to the first shared channel occupancy time is not lower than a channel access priority class corresponding to the second shared channel occupancy time, a layer 1 priority corresponding to the first shared channel occupancy time is not lower than a layer 1 priority corresponding to the second shared channel occupancy time, and a logical channel priority corresponding to the first shared channel occupancy time is not lower than a logical channel priority corresponding to the second shared channel occupancy time.

4. The method according to claim 2, wherein whether the first shared channel occupancy time and the second shared channel occupancy time meet the preset location condition comprises at least one of the following:
the first shared channel occupancy time is not at a time domain end of the channel occupancy time of the second terminal device, and the second shared channel occupancy time is at a time domain end of the channel occupancy time of the third terminal device.

5. The method according to claim 2, wherein that the distance between the at least two of the first terminal device, the second terminal device, and the third terminal device meets the preset distance condition comprises at least one of the following:
a first distance between the first terminal device and the second terminal device is not greater than a first distance threshold, a second distance between the first terminal device and the third terminal device is not less than a second distance threshold, and the first distance is not greater than the second distance.

6. The method according to claim 2, wherein that the length of the overlapping part of the first shared channel occupancy time and the second shared channel occupancy time in time domain meets the preset length condition comprises:
a time domain proportion of the overlapping part of the first shared channel occupancy time and the second shared channel occupancy time in the first shared channel occupancy time is not less than a time domain proportion of the overlapping part in the second shared channel occupancy time.

7. The method according to claim 2, wherein that the start moment and the end moment of the first shared channel occupancy time and the start moment and the end moment of the second shared channel occupancy time meet the preset time condition comprises at least one of the following:
the start moment of the first shared channel occupancy time is earlier than the start moment of the second shared channel occupancy time, and the end moment of the first shared channel occupancy time is later than the end moment of the second shared channel occupancy time.

8. The method according to claim 2, wherein that the minimum packet delay budget of the first terminal device for the first to-be-transmitted information of the second terminal device and the minimum packet delay budget of the first terminal device for the second to-be-transmitted information of the third terminal device meet the preset minimum packet delay budget condition comprises:
the minimum packet delay budget of the first terminal device for the first to-be-transmitted information of the second terminal device is not greater than the minimum packet delay budget of the first terminal device for the second to-be-transmitted information of the third terminal device.

9. The method according to claim 2, wherein that the priority associated with the first to-be-transmitted information and the priority associated with the second to-be-transmitted information meet the second preset priority condition comprises at least one of the following:
a channel access priority class associated with the first to-be-transmitted information is not lower than a channel access priority class associated with the second to-be-transmitted information, a layer 1 priority associated with the first to-be-transmitted information is not lower than a layer 1 priority associated with the second to-be-transmitted information, and a logical channel priority associated with the first to-be-transmitted information is not lower than a logical channel priority associated with the second to-be-transmitted information.

10. The method according to any one of claims 1 to 9, wherein the method further comprises:
sending third information to the third terminal device, wherein the third information indicates that the first terminal device does not use the second shared channel occupancy time.

11. The method according to any one of claims 1 to 10, wherein the method further comprises: releasing a connection to the third terminal device.

12. The method according to claim 11, wherein when the third information is sent to the third terminal device, the third information is carried in a direct communication release message.

13. The method according to any one of claims 1 to 12, wherein the method further comprises: sending padding information by using the second shared channel occupancy time.

14. The method according to any one of claims 1 to 9, wherein the method further comprises:
transmitting data information by using a first subchannel occupancy time in the second shared channel occupancy time, wherein the first subchannel occupancy time comprises a channel occupancy time that is in the second shared channel occupancy time and that does not overlap the first shared channel occupancy time in time domain.

15. The method according to claim 14, wherein the method further comprises:
send fourth information to the third terminal device, wherein the fourth information indicates that the first terminal device uses the first subchannel occupancy time.

16. The method according to claim 15, wherein the method further comprises:
sending fifth information to the third terminal device, wherein the fifth information indicates that the first terminal device does not use a second subchannel occupancy time, and the second subchannel occupancy time is a channel occupancy time that is in the second shared channel occupancy time and that overlaps the first shared channel occupancy time in time domain.

17. The method according to claim 10 or 16, wherein the method further comprises:
receiving sixth information from the third terminal device, wherein the sixth information indicates that the second shared channel occupancy time is not at the time domain end of the channel occupancy time of the third terminal device.

18. The method according to any one of claims 1 to 17, wherein the method further comprises:
send seventh information to the second terminal device, wherein the seventh information indicates that the first terminal device uses the first shared channel occupancy time.

19. The method according to any one of claims 14 to 18, wherein the method further comprises:
sending padding information by using a first subchannel occupancy time, wherein the first subchannel occupancy time comprises a channel occupancy time that is in the second shared channel occupancy time and that does not overlap the first shared channel occupancy time in time domain.

20. A communication method, applied to a first terminal device, wherein the method comprises:
receiving second information from a third terminal device, wherein the second information indicates a second shared channel occupancy time, and the second shared channel occupancy time is a channel occupancy time that is in a channel occupancy time of the third terminal device and that is used to be shared with the first terminal device; and
when to-be-transmitted information of the third terminal device is empty, sending padding information by using the second shared channel occupancy time.

21. A communication method, applied to a third terminal device, wherein the method comprises:
sending second information to a first terminal device, wherein the second information indicates a second shared channel occupancy time, and the second shared channel occupancy time is a channel occupancy time that is in a channel occupancy time of the third terminal device and that is used to be shared with the first terminal device; and
receiving third information, fourth information, or fifth information from the first terminal device.

22. The method according to claim 21, wherein the method further comprises: when the third information indicates that the first terminal device does not use the second shared channel occupancy time, performing, by the third terminal device, communication by using the second shared channel occupancy time.

23. The method according to claim 21, wherein the method further comprises:
when the fourth information indicates that the first terminal device transmits data information by using a first subchannel occupancy time in the second shared channel occupancy time, wherein the first subchannel occupancy time comprises a channel occupancy time that is in the second shared channel occupancy time and that does not overlap a first shared channel occupancy time, and the first shared channel occupancy time is a channel occupancy time that is in a channel occupancy time of a second terminal device and that is used to be shared with the first terminal device,
performing communication by using the first subchannel occupancy time.

24. The method according to claim 21, wherein the method further comprises:
when the fifth information indicates that the first terminal device does not use a second subchannel occupancy time, wherein the second subchannel occupancy time is a channel occupancy time that is in the second shared channel occupancy time and that overlaps a first shared channel occupancy time, and the first shared channel occupancy time is a channel occupancy time that is in a channel occupancy time of a second terminal device and that is used to be shared with the first terminal device,
performing communication by using a first subchannel occupancy time, wherein the first subchannel occupancy time comprises a channel occupancy time that is in the second shared channel occupancy time and that does not overlap the first shared channel occupancy time.

25. A communication apparatus, wherein the communication apparatus comprises a module configured to implement the method according to any one of claims 1 to 20 or any one of claims 21 to 24.

26. A computer-readable storage medium, wherein the computer-readable storage medium stores computer-executable instructions, and when the computer-executable instructions are executed by a processor, the communication method according to any one of claims 1 to 20 or any one of claims 21 to 24 is implemented.

27. A computer program product, comprising a computer program, wherein when the computer program is executed by a processor, the communication method according to any one of claims 1 to 20 or any one of claims 21 to 24 is implemented.
